# EUROPÄISCHE PATENTANMELDUNG

(11) **EP 0 645 684 A1**
(43) Veröffentlichungstag der Anmeldung: **29.03.1995**
(21) Anmeldenummer: 94114320.8
(22) Anmeldetag: 12.09.1994
(51) Int. Cl.: G05B 19/418

(54) **Verfahren zur Überwachung von Materialflussprozessen in der Fertigung**

(30) Priorität: 27.09.1993 DE 4332874
(71) Anmelder: Siemens Nixdorf Informationssysteme AG, D-33106 Paderborn (DE)
(72) Erfinder: Wörle, Rudolf, D-86845 Grossaitingen (DE)
(74) Vertreter: Fuchs, Franz-Josef, Dr.-Ing.

(57) **Zusammenfassung**

Verfahren zur Überwachung von Materialflußprozessen mittels eines automatischen Fehlermeldesystems, das durch Sprachausgabe über Telefon dem Anlagenbetreuer vor Ort Störungen meldet und bei der Entstörung unterstützt.

## Beschreibung

Die Erfindung betrifft ein Verfahren zur Überwachung von Materialflußprozessen in der Fertigung durch ein automatisches Fehlermeldesystem unter Verwendung eines Leitrechners, der Fehlermeldungen von zu überwachenden Einrichtungen erhält und diese an eine Prozeßvisualisierungseinrichtung weitergibt, wobei das automatische Fehlermeldesystem die Fehlermeldungen nach Ort, Art und Zeitpunkt analysiert

In der modernen Fertigung laufen viele Vorgänge automatisch ab. Sie werden in der Regel von einem Leitrechner aus gesteuert.

Ein solches Verfahren ist zum Beispiel aus der Zeitschrift "engineering & automation" 14, (1992), Heft 1, zur Herstellung von Nahrungsmitteln bekannt.

Weitere solche typischen Systeme sind z.B. fahrerlose Transportsysteme, automatisch beschickte Hochregallager oder auch die Warenannahme am Eingang der Fertigung. Bei Störung der automatischen Abläufe werden kodierte Störmeldungen an den Leitrechner abgegeben, der diese an eine Prozeßvisualisierungseinrichtung weitergibt. Dort werden in einer Überwachungszentrale von Systemtechnikern die entsprechenden gestörten Stationen festgestellt und anschließend durch die gleichen Systemtechniker die Fehler besetitigt. Häufig handelt es sich aber lediglich um Bagatellfehler, zu deren Behebung auch nicht besonders geschulte Mitarbeiter eingesetzt werden können. Typische Fehler sind beispielsweise beim fahrerlosen Transportsystem ein Hindernis, das versehentlich in den Fahrweg gestellt wurde, ein vorstehendes Teil bei der Ladung oder auch ein aus der Spur geratenes Fahrzeug.

Aufgabe der vorliegenden Erfindung ist es, ein Verfahren anzugeben, durch das die Entstörung derart automatisch überwachter Einrichtungen vereinfacht wird.

Zur Lösung dieser Aufgabe wird dabei so verfahren, daß das automatische Fehlermeldesystem parallel zur Prozeßvisualisierungseinrichtung geschaltet, und mit einer Schnittstelle des Leitrechners verbunden ist, wobei das automatische Fehlermeldesystem die Kommunikation zwischen Leitrechner und Prozeßvisualisierung passiv mitverfolgt, daßdie Fehlermeldungen in kodierter Form erfolgen und zusätzlich zu den genannten Daten auch die möglichen Auswirkungen auf dem Gesamtmaterialfluß analysiert werden, und daß das Fehlermeldesysem nach erfolgter Analyse mittels vorgegebener Sprachbausteine dem jeweils verantwortlichen Anlagenbetreuer vor Ort über das vorhandene interne Telefonnetz über Fehler und durchgeführte Analyse informiert und Entstörhinweise für die Fehlerbeseitigung gibt.

Durch dieses Verfahren wird eine selbständige Fehleranalyse ohne Zwischenschaltung einer menschlichen Arbeitskraft erzielt. Gleichzeitig wird der auftretende Fehler an den jeweils Zuständigen, per Telefon im Klartext weitergegeben, so daß der Fehler dezentral und nicht, wie bisher zentral, behoben werden kann. Nur Fehler einer bestimmten Kategorie, für deren Beseitigung nachwievor ein Systemtechniker notwendig ist, müssen zentral ausgeführt werden. Aber auch für diesen Fall entfällt das aufwendige Dekodieren des auf der Prozeßvisualisierung angezeigten kodierten Fehlers durch Heraussuchen aus einer Fehlerliste.

Durch dieses System wird auch ermöglicht, daß über eine Personalrufanlage ein Funkspruch an den zuständigen Anlagenbetreuer abgesetzt wird, so daß dieser auch erreichbar ist, wenn er im Werk unterwegs ist.

Das automatische Fehlermeldesystem kann auch über Telefon angerufen werden und gibt dann die gespeicherten Fehler und die Hinweise für deren Entstörung aus.

Darüber hinaus wird die Fehlerhäufigkeit an vorgegebenen Stellen bzw. Fahrzeugen oder Gewerken im Rechner des Fehlermeldesystems registriert, und nach einer vorgebbaren Zahl von Fehlern erfolgt eine Fehlermeldung an den jeweiligen Systemtechniker, der damit einen Hinweis erhält, daß bei einer bestimmten Station offenbar ein grundsätzlicher Fehler vorliegt und nicht eine zufällige Störung.

Dieses Verfahren kann vorteilhaft bei fahrerlosen Transportsystemen oder von ihren bedienten peripheren Gewerken, wie Warenannahme oder Hochregallager angewendet werden.

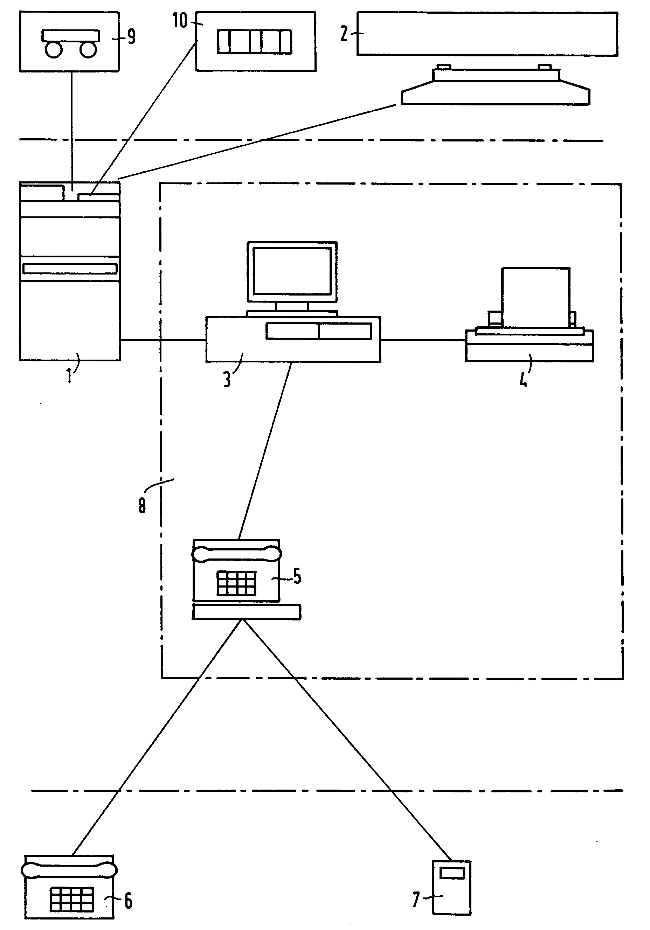

Anhand der Figur wird die Erfindung näher erläutert. Sie zeigt ein Funktionsdiagramm. Das automatische Fehlermeldesystem 8 ist mit dem Leitrechner 1 verbunden, der mit den zu überwachenden Einrichtungen, wie z.B. dem fahrerlosen Transportsystem 9, einem Hochregallager 10 oder der Warenannahme 2, verbunden ist. Das automatische Fehlermeldesystem 8 besteht aus einem Rechner 3, einem Speicher 4 und dem Telefon 5. Von diesem Telefon 5 aus sind außerdem alle Telefone 6 der internen Telefonanlage und auch alle Funkgeräte 7 der Personalrufanlage erreichbar.

Tritt an entsprechend ausgewählten Stellen ein Fehler auf, so wählt der Rechner 3 den Verursacher an. Über eine Sprachausgabe wird mit Hilfe des Telefons 5 der aus Sprachbausteinen zusammengesetzte Fehlertext, sowie die entsprechende Entstörhilfe, dem jeweils zuständigen Anlagenbetreuer über die interne Telefonanlage mit den Telefonen 6 übermittelt. Ist dieser gerade telefonisch nicht erreichbar, so wird nach einer festgelegten Zeit der Betreffende über die Personenrufanlage gesucht. Diese Suche kann auch unmittelbar erfolgen. Ist der Fehler beseitigt, wird im Gerät 4 eine Schwachstellenanalyse durchgeführt und der betreffende Fehler protokolliert. Kann der Fehler nicht behoben werden, kann über die Personenrufanlage ein Notruf zum Systemtechniker abgesetzt werden.

Das automatische Fehlermeldesystem unterscheidet prinzipiell drei Störungsarten, nämlich Fahrzeugfehler, Peripheriefehler oder Materialflußstörungen. Bei Fahrzeugfehlern wertet das automatische Fehlermeldesystem die vom fahrerlosen Transportsystem generierten Fehlermeldungen nach vom Betreiber vorgegebenen Kriterien aus. Dazu sind alle Fehler in einer eigenen Datenbank beschrieben.

Bei der Überwachung von Peripheriezuständen, z.B. des Hochregallagers oder der Fördertechnik aller fahrerlosen Transportsystembahnhöfe, wird auf "Betriebsbereitschaft", auf "Übergabeplatz belegt" oder "frei" und auf "Station gestört" hin überwacht. Es wird ein Prozeßabbild des fahrerlosen Transportsystems des Hochregallagers und der Fördertechnik erstellt und auf ein in der Datenbank abgelegtes Fehlerbild überprüft. Es können somit nicht nur die vom fahrerlosen Transportsystemleitrechner generierten Fehlermeldungen verarbeitet, sondern beliebige Prozeßzustände der Peripherie als Fehler definiert werden.

Ausgehend von der Erkenntnis, wonach jede Behinderung oder Störung im Materialfluß zu mindestens einem der beiden Symptome führt, entweder die Fahrzeuge stecken im Stau, (keine Bewegung) oder eine Störzellenfahrt wird generiert. Ein solches, vom Normalzustand abweichendes Systemverhalten wird vom automatischen Fehlermeldesystem erkannt, auf einen möglichen Verursacher analysiert und dem zuständigen Betreiber in Form einer Störmeldung mitgeteilt. Durch diese globale, ganzheitliche Betrachtungsweise des Materialflusses werden vom automatischen Fehlermeldesystem nicht nur technische Störungen, sondern auch Bedienerfehler am Hochregallager oder an der Warenausgabe sicher analysiert.

Bei der Lokalisierung wird als Fehlerort sowohl ein feststehendes Gewerk, z.B. das Hochregallager oder ein Bahnhof des fahrerlosen Transportsystems, oder ein Teilstück einer Fahrstrecke des fahrerlosen Transportsystems verstanden. Entscheidend für Organisation und Bewertung eines Bereichs sind die Transportdichte, zeitkritische Bedingungen oder Personalverfügbarkeit bzw. Organisation. Dabei läßt sich die Fehlerart in unterschiedliche Klassen einteilen, beispielsweise einfache Fehler, die vom Betreiber behebbar sind, schwierigere Fehler, die nicht vom Betreiber behebbar sind, oder sehr schwierige Fehler, zu denen eine Systemkenntnis notwendig ist.

Auch der Zustand bei bestimmten Zeiten kann mit diesem System berücksichtigt werden. So wird die Fehlerbearbeitung sehr stark von der jeweiligen Schichtzeit beeinflußt. Während eines Schichtwechsels ist beispielsweise ein unklarer Stationszustand normal und darf deshalb nicht als Fehler interpretiert werden. So kann eine interne Schichtverwaltung vom automatischen Fehlermeldesystem durchgeführt werden.

Auch der Status des auftretenden Fehlers kann bewertet werden. So können beispielsweise einfache Materialflußstörungen einen niedrigeren Status als schwierigere Störungen haben. Dies kann sich auch mit zunmehmender Störzeit ändern. Mit jeder Statusänderung einer Störung ändert sich auch die Reaktion des automatischen Fehlermeldesystems auf diese Störung.

Das Fehlermeldesystem verfügt über ein Sprachausgabemodul und eine automatische Telefonwahleinrichtung, die auch die Personalrufanlage bedienen kann. Damit stehen je nach Störungsart und Störungszustand zwei Meldewege zur Verfügung. Wenn das Störsystem anruft, wird das Telefon abgehoben, und es beginnt die Sprachausgabe. Alle anstehenden Fehler werden gemeldet. Wenn über die Personalrufanlage gesucht wird, stellt bei einem eingehenden Rückruf das automatische Fehlermeldesystem die Telefonverbindung her und beginnt ebenfalls mit der Sprachausgabe. Der Störmeldetext wird dabei selbständig aus mehreren Textbausteinen nach erfolgter Fehleranalyse zusammengestellt. Die Textbausteine werden vorher in einem Speicher hinterlegt. Diese Sprachbausteine können auch in unterschiedlichen Sprachen hinterlegt werden.

## Patentansprüche

1. Verfahren zur Überwachung von Materialflußprozessen in der Fertigung durch ein automatisches Fehlermeldesystem unter Verwendung eines Leitrechners, der Fehlermeldungen von zu überwachenden Einrichtungen erhält und diese an eine Prozeßvisualisierungseinrichtung weitergibt, wobei das automatische Fehlermeldesystem die Fehlermeldungen nach Ort, Art und Zeitpunkt analysiert,
**dadurch gekennzeichnet,**
daß das automatische Fehlermeldesystem parallel zur Prozeßvisualisierungseinrichtung geschaltet, und mit einer Schnittstelle des Leitrechners verbunden ist, wobei das automatische Fehlermeldesystem die Kommunikation zwischen Leitrechner und Prozeßvisualisierung passiv mitverfolgt, daßdie Fehlermeldungen in kodierter Form erfolgen und zusätzlich zu den genannten Daten auch die möglichen Auswirkungen auf dem Gesamtmaterialfluß analysiert werden, und daß das Fehlermeldesysem nach erfolgter Analyse mittels vorgegebener Sprachbausteine dem jeweils verantwortlichen Anlagenbetreuer vor Ort über das vorhandene interne Telefonnetz über Fehler und durchgeführte Analyse informiert und Entstörhinweise für die Fehlerbeseitigung gibt.

2. Verfahren zur Überwachung von Materialflußprozessen in der Fertigung nach Anspruch 1,
**dadurch gekennzeichnet,**
daß über eine Personalrufanlage ein Funkspruch an den verantwortlichen Anlagenbetreuer automatisch übermittelt wird.

3. Verfahren zur Überwachung von Materialflußprozessen in der Fertigung nach einem der vorhergehenden Ansprüche,
**dadurch gekennzeichnet,**
daß das automatische Fehlermeldesystem über Telefon anrufbar ist.

4. Verfahren zur Überwachung von Materialflußprozessen in der Fertigung nach einem der vorhergehenden Ansprüche,
**dadurch gekennzeichnet,**
daß die Fehlerhäufigkeit im Rechner des Fehlermeldesystems registriert wird und nach einer bestimmten Anzahl von Fehlern eine Fehlermeldung an den Systemtechniker erfolgt.

5. Verfahren zur Überwachung von Materialflußprozessen in der Fertigung nach einem der vorhergehenden Ansprüche,
**dadurch gekennzeichnet,**
daß dieses Verfahren bei fahrerlosen Transportsystemen oder von ihnen bedienten peripheren Gewerken, wie Warenannahme oder Hochregallager angewendet wird.
